# EUROPEAN PATENT APPLICATION

(11) **EP 4 512 554 A1**
(43) Date of publication of application: **26.02.2025**
(21) Application number: 24194773.8
(22) Date of filing: 15.08.2024
(51) Int. Cl.: B22F 10/80, B33Y 50/00, G06F 9/451, B22F 10/28, B33Y 10/00

(54) **INFORMATION PROCESSING APPARATUS AND THREE-DIMENSIONAL POWDER BED FUSION ADDITIVE MANUFACTURING APPARATUS**

(30) Priority: 25.08.2023 JP 2023137116
(71) Applicant: Jeol Ltd., Akishima-shi, Tokyo 196-8558 (JP)
(72) Inventor: HISAKI, Taku, Tokyo, 196-8558 (JP); TSUTAGAWA, Nari, Tokyo, 196-8558 (JP)
(74) Representative: Boult Wade Tennant LLP

(57) **Abstract**

Provided is an information processing apparatus (54) capable of allowing a user to check a melting condition.

An information processing apparatus (54) includes: an irradiation point output unit (63) configured to output an irradiation point of a manufacturing beam (15) read from a manufacturing file to a display unit (70); a position specifying unit (64) configured to specify a position of the irradiation point designated by an input unit (60); and a melting condition output unit (65) configured to search the manufacturing file for a melting condition of the irradiation point at the specified position and output the searched melting condition to the display unit(70).

## Description

### BACKGROUND

### Technical Field

The present invention relates to an information processing apparatus and a three-dimensional powder bed fusion additive manufacturing (PBF-AM) apparatus.

### Related Art

In recent years, a three-dimensional powder bed fusion additive manufacturing (PBF-AM) technique in which layers obtained by thinly laying a powder material of metal are layered one by one is in the limelight, and many types of three-dimensional PBF-AM techniques have been developed depending on the material of the powder material and the manufacturing method.

In the manufacturing method of the three-dimensional PBF-AM apparatus in the related art, for example, the powder material is spread one by one on a base plate installed on the upper surface of a stage. Next, with respect to the powder material spread on the base plate, only the two-dimensional structure portion corresponding to one cross section of a manufactured object is melted by a heating mechanism including an electron beam or a laser. Then, such layers of the powder material are stacked one by one in the height direction (Z direction) to form the manufactured object.

Patent Literature 1 describes a technique of providing a detection unit that detects backscattered electrons generated when a powder material is irradiated with an electron beam, and determining the state of a manufactured object based on information detected by the detection unit.

### Citation List

### Patent Literature

Patent Literature 1: JP 2021-42410 A

### SUMMARY

In the electron beam three-dimensional powder bed fusion additive manufacturing of the powder bed system, for example, it is important to appropriately set melting conditions for melting the metal powder such as an emission current value and a scan speed. When the melting conditions are not appropriate, insufficient melting or excessive melting may occur, and as a result, a defective product having a problem in strength and durability of a finally produced product is obtained.

It is useful for a user to check the melting condition in order to determine the cause of the defect occurring in the product. However, in the three-dimensional PBF-AM apparatus in the related art, how the melting condition changes is not shown, and the user cannot check the melting condition.

The present invention has been made in view of such a situation, and an object thereof is to enable a user to check a melting condition.

In order to achieve at least one of the above-described objects, an information processing apparatus reflecting one aspect of the present invention includes: an irradiation point output unit configured to output an irradiation point of a manufacturing beam read from a manufacturing file to a display unit; a position specifying unit configured to specify a position of the irradiation point designated by an input unit; and a melting condition output unit configured to search the manufacturing file for a melting condition of the irradiation point at the specified position and output the searched melting condition to the display unit.

Note that the above information processing apparatus is one aspect of the present invention, and a three-dimensional PBF-AM apparatus reflecting one aspect of the present invention is configured similarly to the above information processing apparatus.

According to the present invention, a user can easily check the melting condition.

Problems, configurations, and effects other than those described above will be clarified by the following description of embodiments.

### BRIEF DESCRIPTION OF DRAWINGS

FIG. 1 is a schematic cross-sectional view schematically illustrating a three-dimensional PBF-AM apparatus according to a first embodiment of the present invention;
FIG. 2 is a block diagram illustrating a configuration example of a control system of the three-dimensional PBF-AM apparatus according to the first embodiment of the present invention;
FIG. 3 is a block diagram illustrating a configuration example of a control block of a PC according to the first embodiment of the present invention;
FIG. 4 is a diagram illustrating a display example of a manufacturing region display screen according to the first embodiment of the present invention;
FIG. 5 is a diagram illustrating a display example of a region enlargement screen according to the first embodiment of the present invention;
FIG. 6 is a diagram illustrating a display example of a correction condition change screen according to the first embodiment of the present invention;
FIG. 7 is a flowchart illustrating an example of manufacturing file generating processing in manufacturing control software according to the first embodiment of the present invention;
FIG. 8 is a block diagram illustrating a configuration example of a control block of a PC according to a second embodiment of the present invention;
FIG. 9 is a diagram illustrating a display example of a melting condition search screen (melting condition type change) according to the second embodiment of the present invention;
FIG. 10 is a diagram illustrating a display example of a melting condition search screen (addition of search condition) according to the second embodiment of the present invention;
FIG. 11 is a diagram illustrating a display example of a melting condition search screen (search next) according to the second embodiment of the present invention;
FIG. 12 is a diagram illustrating a display example of a manufacturing region display screen (search next) according to the second embodiment of the present invention; and
FIG. 13 is a diagram illustrating a display example of a melting condition search screen (designation of search range) according to a third embodiment of the present invention.

### DETAILED DESCRIPTION

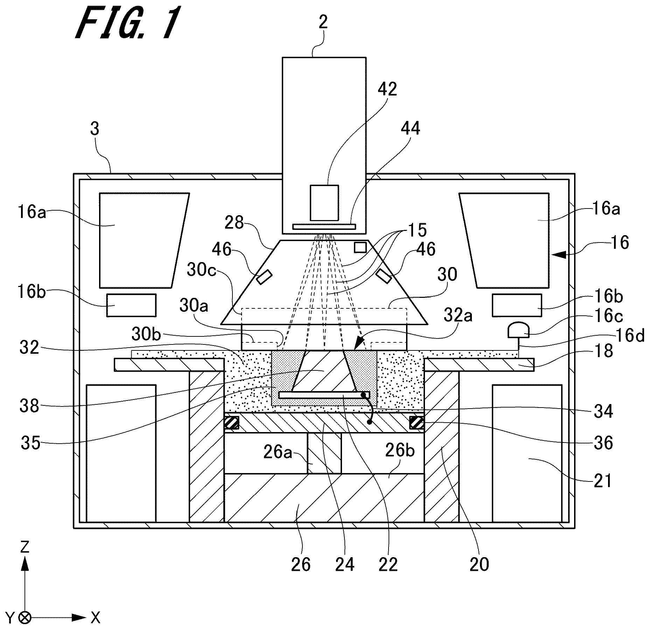

Hereinafter, a three-dimensional PBF-AM apparatus and a method for controlling the three-dimensional PBF-AM apparatus according to an embodiment of the present invention will be described with reference to FIGS. 1 to 7. Note that the same reference numerals are given to common members in the respective drawings, and redundant description will be omitted.

### 1. First embodiment

### 1-1. Configuration of Three-Dimensional PBF-AM Apparatus

First, a first embodiment of a three-dimensional PBF-AM apparatus according to a first embodiment (hereinafter, referred to as "present example") of the present invention will be described with reference to FIG. 1.

FIG. 1 is a schematic cross-sectional view schematically illustrating a three-dimensional PBF-AM apparatus according to the present example. In the following description, in order to clarify the shape, positional relationship, and the like of each part of the three-dimensional PBF-AM apparatus, the left-right direction in FIG. 1 is referred to as an X direction, the depth direction in FIG. 1 is referred to as a Y direction, and the vertical direction in FIG. 1 is referred to as a Z direction. The X direction, the Y direction, and the Z direction are directions orthogonal to each other. Further, the X direction and the Y direction are parallel to the horizontal direction, and the Z direction is parallel to the perpendicular direction.

A three-dimensional PBF-AM apparatus 1 illustrated in FIG. 1 is an apparatus that irradiates a powder material 32 made of a metal powder such as titanium, aluminum, or iron with an electron beam 15 (an example of a manufacturing beam) to melt the powder material 32, and stacks layers in which the powder material 32 is solidified to manufacture a three-dimensional object.

As illustrated in FIG. 1, the three-dimensional PBF-AM apparatus 1 includes a vacuum chamber 3, a beam irradiation device 2, a powder supply device 16, a build table 18, a build box 20, and a collection box 21. Furthermore, the three-dimensional PBF-AM apparatus 1 includes a build plate 22, an inner base 24, a plate moving device 26, a radiation shield cover 28, an electron shield 30, a camera 42, and a shutter 44. Furthermore, the three-dimensional PBF-AM apparatus 1 includes a plurality of detection units 46 that detect backscattered electrons.

The vacuum chamber 3 is a chamber for creating a vacuum state by evacuating the air in the chamber by a vacuum pump (not illustrated). The inside of the vacuum chamber 3 is maintained in vacuum. Further, the beam irradiation device 2 is attached to the vacuum chamber 3.

The beam irradiation device 2 is a device that irradiates the build plate 22 or a manufactured surface 32a of a powder layer formed of the powder material 32 with the electron beam 15, and includes an electron gun (an example of a beam irradiation unit) and an electron optical system. The manufactured surface 32a corresponds to the upper surface of the powder layer. The state of the powder layer changes as the three-dimensional PBF-AM processing proceeds. Although not illustrated, the beam irradiation device 2 includes, as an electron optical system, an electron gun that is a generation source of the electron beam 15, a focusing lens that focuses the electron beam 15 generated by the electron gun, and a deflection lens that deflects the electron beam 15 focused by the focusing lens.

The focusing lens is configured using a focusing coil, and focuses the electron beam 15 by a magnetic field generated by the focusing coil. The deflection lens is configured using a deflection coil, and deflects the electron beam 15 by a magnetic field generated by the deflection coil. Therefore, the electron optical system scans the electron beam 15 according to the melting condition for melting the powder material, and melts the uppermost layer (an example of a powder bed) of the powder material spread on the build plate 22 by the electron beam 15.

The powder supply device 16 (an example of a powder supply system) supplies the powder material 32 onto the build table 18 as an example of a powder material to be a raw material of the manufactured object 38, and spreads the powder material over the build plate 22 to form a powder layer. The powder supply device 16 includes a hopper 16a, a powder dropping device 16b, and a squeegee 16c.

The hopper 16a is a chamber for storing metal powder. The powder dropping device 16b is a device that drops the powder material 32 stored in the hopper 16a onto the build table 18.

The squeegee 16c is an elongated member long in the Y direction, and includes a blade 16d for spreading powder. The squeegee 16c spreads the powder material 32 dropped by the powder dropping device 16b on the build table 18 and the build plate 22. Note that the squeegee 16c is provided to be movable in the X direction in order to spread the powder material 32 over the entire surface of the build table 18.

The build table 18 is horizontally disposed inside the vacuum chamber 3. The build table 18 is disposed below the powder supply device 16. A central portion of the build table 18 is opened. The opening shape of the build table 18 is a circle in plan view or a square in plan view (for example, a quadrangle in plan view).

The build box 20 forms a space for manufacturing. In the vacuum chamber 3, the build box 20 having a circular or angular cross section is provided. An upper end portion of the build box 20 is connected to an opening edge of the build table 18. A lower end portion of the build box 20 is connected to a bottom wall of the vacuum chamber 3.

The collection box 21 recovers the powder material 32 supplied more than necessary among the powder materials 32 supplied onto the build table 18 by the powder supply device 16.

The build plate 22 forms the manufactured object 38 using the powder material 32. The manufactured object 38 is formed by being stacked on the build plate 22. The build plate 22 is formed in a circular shape in plan view or a square shape in plan view in accordance with the opening shape of the build table 18.

The build plate 22 is connected (grounded) to the inner base 24 by a ground wire 34 so as not to be in an electrically floating state. The inner base 24 is held at a ground (GND) potential.

When manufacturing each layer of the manufactured object 38, a powder bed is formed on the build plate 22 and the inner base 24. In the powder bed, the powder material 32 is spread up to a position several mm higher than the build table 18 installed on the build box 20. The powder bed is formed by the powder supply device 16 filled with the powder material 32 and the squeegee 16c.

The inner base 24 is provided to be movable in the vertical direction (Z direction). The build plate 22 moves in the vertical direction integrally with the inner base 24. The inner base 24 has a larger outer dimension than the build plate 22. The inner base 24 slides in the vertical direction along the inner surface of the build box 20. A seal member 36 is attached to an outer peripheral portion of the inner base 24. The seal member 36 is a member that maintains slidability and sealability between the outer peripheral portion of the inner base 24 and the inner surface of the build box 20.

The seal member 36 is made of a material having heat resistance and elasticity. The powder material 32 is spread on the inner base 24, and a build plate 22 on which the manufactured object 38 is manufactured is arranged.

The plate moving device 26 moves the build plate 22 and the inner base 24 in the vertical direction. The plate moving device 26 is provided inside and below the build box 20. The plate moving device 26 includes a shaft 26a and a drive mechanism unit 26b. The shaft 26a is connected to the lower surface of the inner base 24. The drive mechanism unit 26b includes a motor and a power transmission mechanism (not illustrated), and drives the power transmission mechanism using the motor as a drive source to move the build plate 22 and the inner base 24 integrally with the shaft 26a in the vertical direction. The power transmission mechanism includes, for example, a rack and pinion mechanism, a ball screw mechanism, and the like.

The radiation shield cover 28 is arranged between the build plate 22 and the beam irradiation device 2 in the Z direction. The radiation shield cover 28 is made of metal such as stainless steel. The radiation shield cover 28 shields radiant heat generated when the powder material 32 is irradiated with the electron beam 15 by the beam irradiation device 2.

The electron beam 15 irradiates the powder material 32 and melts the powder material 32. At this time, if radiant heat radiated from the manufactured surface 32a of the powder layer is widely diffused into the vacuum chamber 3, thermal efficiency is deteriorated.

On the other hand, when the radiation shield cover 28 is arranged above the build plate 22, the heat radiated from the manufactured surface 32a is shielded by the radiation shield cover 28, and the shielded heat is reflected by the radiation shield cover 28 and returned to the build plate 22 side. Therefore, the heat generated by the irradiation of the electron beam 15 can be efficiently used.

In addition, the radiation shield cover 28 has a function of preventing the evaporated substance generated when the powder material 32 is irradiated with the electron beam 15 from adhering (depositing) to the inner wall of the vacuum chamber 3.

Here, the deposition material is metal vapor, metal sputtering by fireworks, and the like.

That is, when the powder material 32 is irradiated with the electron beam 15, a part of the melted metal becomes an atomized evaporated substance and rises from the manufactured surface 32a. The radiation shield cover 28 is disposed so as to cover the space above the manufactured surface 32a so that the evaporated substance does not diffuse into the vacuum chamber 3.

The manufactured object 38 is constructed by two-dimensionally melting the powder material 32 of one layer existing in the region of the manufactured object 38 by the electron beam 15 from the beam irradiation device 2 and superimposing the melted powder material. A region other than the manufactured object 38 of the powder material 32 laid on the build plate 22 is a pre-sintered body 35 obtained by pre-sintering the powder material 32, and has conductivity by the electron beam 15 emitted from the beam irradiation device 2.

The electron shield 30 is attached below the radiation shield cover 28. The electron shield 30 has an opening 30a and a mask portion 30b. In forming the manufactured object 38, the electron shield 30 is arranged to cover the upper surface of the powder material 32, that is, the manufactured surface 32a.

At this time, the opening 30a exposes the powder material 32 spread on the build plate 22. The mask portion 30b is a conductive material that shields the powder material 32 in the unsintered region located outside the opening 30a. Note that the mask portion 30b is desirably formed of the same type of metal material as the powder material.

The shape of the opening 30a is formed in accordance with the shape of the build plate 22. For example, if the build plate 22 is circular in plan view, the shape of the opening 30a in plan view is formed in a circular shape accordingly, and if the build plate 22 is rectangular in plan view, the shape of the opening 30a in plan view is formed in a rectangular shape accordingly.

The electron shield 30 is disposed below the radiation shield cover 28. The opening 30a and the mask portion 30b of the electron shield 30 are arranged between the build plate 22 and the radiation shield cover 28 in the Z direction. The electron shield 30 includes an enclosure portion 30c. The enclosure portion 30c is disposed so as to surround the space above the opening 30a. A part (upper portion) of the enclosure portion 30c overlaps the radiation shield cover 28 in the Z direction.

The enclosure portion 30c has a function of shielding radiant heat generated from the manufactured surface 32a and a function of suppressing diffusion of an evaporated substance generated from the manufactured surface 32a. That is, the enclosure portion 30c has the same function as the radiation shield cover 28. Although not illustrated, the electron shield 30 is provided with a vertical drive mechanism so as to rise without interfering with the squeegee 16c at the time of squeegeeing.

The electron shield 30 is made of metal having a melting point higher than that of the powder material 32 used as a raw material of the manufactured object 38. The electron shield 30 is made of a material having low reactivity with the powder material 32. As a constituent material of the electron shield 30, for example, titanium can be exemplified. In addition, the electron shield 30 may be made of metal of the same material as the powder material 32 to be used. Although not illustrated, the electron shield 30 is electrically grounded to GND. The electron shield 30 reduces the occurrence of powder scattering to a small scale by an electric shield function when the powder material 32 is pre-sintered by irradiation with the electron beam 15 in a preheating step before a sintering step described later.

On the upper surface of the radiation shield cover 28, a camera 42 for photographing the state of the manufactured surface and a shutter 44 for preventing vapor deposition on the camera 42 as much as possible are attached. The camera 42 is a camera capable of photographing the manufactured surface 32a of the powder layer. The camera 42 is arranged to be shifted in position in the Y direction from the beam irradiation device 2 so as not to interfere with the position of the beam irradiation device 2.

The camera 42 is preferably a visible light camera such as a digital video camera. The camera 42 generates an image (image data) of the powder layer by photographing the manufactured surface 32a of the powder layer. Therefore, the image generated by the camera 42 is an image indicating the state of the manufactured surface 32a of the powder layer. Note that, the photographing by the camera 42 is performed in a state where illumination light emitted from an illumination light source (not illustrated) included in the three-dimensional PBF-AM apparatus 1 is applied to the manufactured surface 32a of the powder layer.

The shutter 44 protects the camera 42 and the observation window so that the evaporated substance generated from the manufactured surface 32a when the powder material 32 is melted by the irradiation of the electron beam 15 does not adhere to the camera 42 and the observation window. The photographing of the manufactured surface 32a by the camera 42 is performed in a state where the shutter 44 is opened. The camera 42 basically keeps shooting, and the shutter 44 is closed only during the melting process. In addition, in a process in which the evaporated substance is likely to be generated and a process in which the amount of the evaporated substance generated is large, that is, in a process in which the powder material 32 is melted by the electron beam 15, photographing by the camera 42 is performed in a state in which the shutter 44 is closed.

The plurality of detection units 46 that detect the backscattered electrons are arranged below the beam irradiation device 2.

Specifically, the detection unit 46 is arranged between the beam irradiation device 2 and the manufactured surface 32a of the manufactured object 38 formed on the build plate 22.

In recent years, for the purpose of quality control of the manufactured object 38, a three-dimensional PBF-AM apparatus 1 to which a function of monitoring a surface of the manufactured object 38 is added has been provided.

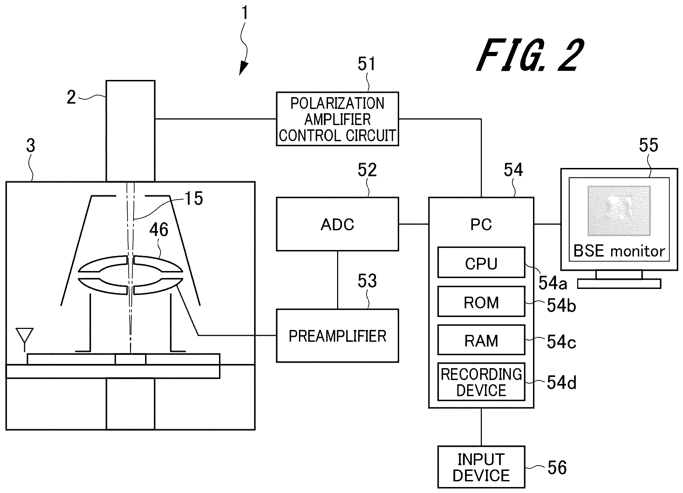

FIG. 2 is a block diagram illustrating a configuration example of a control system of the three-dimensional PBF-AM apparatus 1 according to the present example. The three-dimensional PBF-AM apparatus 1 includes the detection unit 46 described above. Furthermore, in FIG. 2, hardware and software portions for performing manufacturing control, which are outside the configuration of the three-dimensional PBF-AM apparatus 1 shown in FIG. 1, are added.

As illustrated in FIG. 2, the three-dimensional PBF-AM apparatus 1 includes a polarization amplifier control circuit 51 indicating an electron beam control unit, an analog-digital conversion circuit (ADC) 52, a preamplifier 53, a personal computer (PC) 54 indicating an example of a control unit, and a BSE monitor 55.

The polarization amplifier control circuit 51 is connected to the beam irradiation device 2 and the PC 54. Then, the polarization amplifier control circuit 51 controls the beam irradiation device 2 based on the set beam scanning information. As a result, the beam irradiation device 2 irradiates a predetermined position with the electron beam 15. In addition, the polarization amplifier control circuit 51 transmits beam irradiation position information indicating the irradiation position of the electron beam 15 to the PC 54.

The preamplifier 53 is connected to the detection unit 46 and the ADC 52. Then, the preamplifier 53 converts the backscattered electron current detected by the detection unit 46 from a current signal to a voltage signal. The voltage signal converted by the preamplifier 53 is transmitted to the ADC 52. The ADC 52 converts the backscattered electron signal, which is a voltage signal, from an analog signal to a digital signal and transmits the digital signal to the PC 54.

The PC 54 is an example of an information processing apparatus, and includes a central processing unit (CPU) 54a, a read only memory (ROM) 54b, a random access memory (RAM) 54c, and a recording device 54d.

The CPU 54a reads a program code of software for implementing each function according to the present embodiment from the ROM 54b, loads the program code into the RAM 54c, and executes the program code. Variables, parameters, and the like generated during the arithmetic processing of the CPU 54a are temporarily written to the RAM 54c, and these variables, parameters, and the like are appropriately read by the CPU 54a.

An image processing unit, which is one function of the CPU 54a, captures an image generated by the camera 42 and performs predetermined image processing on the captured image. Then, the PC 54 outputs the camera image subjected to the image processing by the image processing unit to the BSE monitor 55. The manufacturing control software program (hereinafter, abbreviated as "manufacturing control software") read from the ROM 54b and executed by the CPU 54a controls the polarization amplifier control circuit 51. The manufacturing control software controls the preamplifier 53 via the ADC 52.

As the recording device 54d, for example, a nonvolatile recording medium such as a hard disk drive (HDD), a solid state drive (SSD), an optical disk, a magnetooptical disk, or a flash memory is used.

In addition to an operating system (OS) and various parameters, a program for causing the PC 54 to function is recorded in the recording device 54d.

The ROM 54b and the recording device 54d record programs, data, and the like necessary for the operation of the CPU 54a, and are used as an example of a non-transitory computer-readable storage medium storing a program executed by the PC 54. The recording device 54d stores the camera image generated by the image processing unit. Further, the recording device 54d stores the beam irradiation position information transmitted from the polarization amplifier control circuit 51.

The CPU 54a selects a predetermined arithmetic expression from a plurality of arithmetic expressions according to the manufacturing process. Then, the CPU 54a performs arithmetic processing on the backscattered electron signal using the selected arithmetic expression to calculate an arithmetic signal. Then, the image processing unit images the arithmetic signal to acquire a backscattered electron image (BSE image). The CPU 54a outputs the acquired backscattered electron image (BSE image) to the BSE monitor 55. In addition, the recording device 54d stores the backscattered electron image (BSE image).

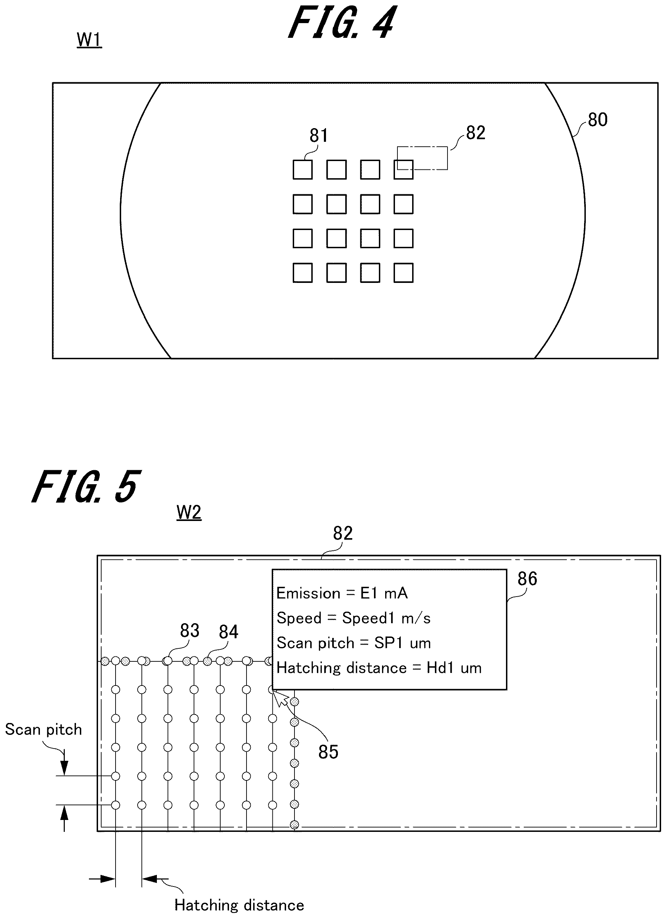

The BSE monitor 55 includes, for example, a display such as a liquid crystal display (LCD) device or an organic electro luminescence display (ELD). The BSE monitor 55 displays the BSE image and the camera image output from the PC 54 on a display screen illustrated in FIGS. 4, 5, and the like to be described later.

As the input device 56, for example, a keyboard, a mouse, or the like is used. The user can perform predetermined operation input and instruction to the PC 54 using the input device 56.

### 1-2. Operation Example of Three-Dimensional PBF-AM Apparatus

Next, an operation example of the three-dimensional PBF-AM apparatus 1 will be described.

First, the user creates build data for melting according to the shape of a manufactured object to be performed using the manufacturing control software in the PC 54. At this time, the user inputs appropriate melting conditions including a correction function and the like. After completing the creation of the build data, the user causes the three-dimensional PBF-AM apparatus 1 to start the manufacturing based on the build data.

Next, the beam irradiation device 2 operates based on a control command given from the PC 54 to heat the build plate 22. The beam irradiation device 2 irradiates the build plate 22 with the electron beam 15 through the opening 30a of the electron shield 30, and scans the build plate 22 with the electron beam 15. Thus, the build plate 22 is heated to a temperature at which the powder material 32 is pre-sintered.

Next, the powder material 32 is spread on the build plate 22. The plate moving device 26 lowers the build plate 22 by a predetermined amount by operating based on a control command given from the PC 54.

Next, the user disposes the upper surface of the build plate 22 covered with the powder material 32 at substantially the same height as the upper surface of the powder material 32 spread on the build table 18. Next, the user lowers the electron shield 30 to the upper surface of the build plate 22, and brings the electron shield 30 into contact with the powder material 32 so as to cover the powder material 32 existing on the outer periphery of the build plate 22.

Next, the beam irradiation device 2 irradiates a region slightly narrower than the entire upper surface of the build plate 22 with the electron beam 15. That is, a region slightly narrower than the entire upper surface of the build plate 22 is a region where the electron beam 15 is not applied to the opening inside the electron shield 30, and the beam irradiation device 2 irradiates this region with the electron beam.

As described above, the beam irradiation device 2 irradiates a region slightly narrower than the entire upper surface of the build plate 22 with the electron beam 15, thereby raising the temperature of the build plate 22 in advance to a temperature at which the powder material 32 is completely pre-sintered.

At the start of manufacturing, the plate moving device 26 lowers the inner base 24 by a predetermined amount so that the upper surface of the build plate 22 is slightly lower than the upper surface of the powder material 32 spread on the build table 18. At this time, the build plate 22 is lowered by a predetermined amount ΔZ together with the inner base 24. The slightly lowered ΔZ corresponds to the subsequent layer thickness in the Z direction. Thereafter, the plate moving device 26 moves the electron shield 30 upward.

Next, the powder supply device 16 drops the powder material 32 supplied from the hopper 16a to the powder dropping device 16b onto the build table 18 by the powder dropping device 16b. Thereafter, the powder supply device 16 moves the squeegee 16c from one end side to the other end side in the X direction to spread the powder material 32 on the inner base 24 to form a powder bed.

As a result, the powder material 32 is spread on the build table 18 with a thickness corresponding to ΔZ. Further, the excess powder material 32 is collected in the collection box 21. After the squeegee 16c comes out of the electron shield 30, the powder supply device 16 lowers the electron shield 30 to the manufactured surface again, and the electron shield 30 covers the powder material 32 present on the outer periphery of the build plate 22.

Next, the beam irradiation device 2 operates based on a control command given from the polarization amplifier control circuit 51 and the PC 54 to preheat the powder layer on the build plate 22. That is, the beam irradiation device 2 performs powder-heat (P.H) on the powder layer on the build plate 22 to pre-sinter the powder material 32. When the powder material 32 is pre-sintered, the powder material 32 can have electrical conductivity. Therefore, the powder material 32 can suppress powder scattering in the sintering step performed after the preheating step.

The beam irradiation device 2 irradiates the powder material 32 spread on the build plate 22 with the electron beam 15. Furthermore, the beam irradiation device 2 scans the electron beam 15 over a wider range than a region for forming the manufactured object 38 (hereinafter, also referred to as a "manufacturing region"), which is a region where the electron beam does not hit the inner opening of the electron shield 30. Thus, the powder material 32 present in the manufacturing region and the powder material 32 present around the manufacturing region are both pre-sintered.

The beam irradiation device 2 melts the two-dimensional shape region by the electron beam 15 according to the two-dimensional shape obtained by slicing the designed manufactured object prepared in advance at ΔZ intervals. After melting and solidifying the powder material 32 for one layer, the beam irradiation device 2 irradiates a region slightly narrower than the build plate 22 with the electron beam 15 again to raise the temperature, and prepares for laying up the powder material 32. After raising the temperature to a predetermined temperature, the beam irradiation device 2 turns off the electron beam 15 and moves the electron shield 30 upward.

The plate moving device 26 lowers the inner base 24 by ΔZ, and moves the squeegee 16c to the opposite side again along the upper surface of the powder material 32 spread on the build table 18. Then, the plate moving device 26 lays the powder material 32 for ΔZ on the front layer, and lowers the electron shield 30 to the manufactured surface again.

The beam irradiation device 2 irradiates a region where the electron beam 15 does not hit the opening inside the electron shield 30 with the electron beam 15, reliably pre-sintering the powder material 32 newly laid, and then, melts a two-dimensional region corresponding to the layer. The beam irradiation device 2 repeats this process to form the manufactured object 38.

In addition, the beam irradiation device 2 acquires a backscattered electron image (BSE image) as described below. First, the beam irradiation device 2 operates based on a control command given from the polarization amplifier control circuit 51 and the PC 54 to scan the electron beam 15 on the pre-sintered region where the pre-sintered powder material 32 exists. At this time, the beam irradiation device 2 reduces the electron beam current of the electron beam 15 as much as possible, and irradiates the manufactured surface 32a in focus. The detection unit 46 detects backscattered electrons generated by the electron beam 15. The detection unit 46 outputs the detected backscattered electron signal to the PC 54 via the preamplifier 53 and the ADC 52.

### 1-3. Configuration Example of Control Block

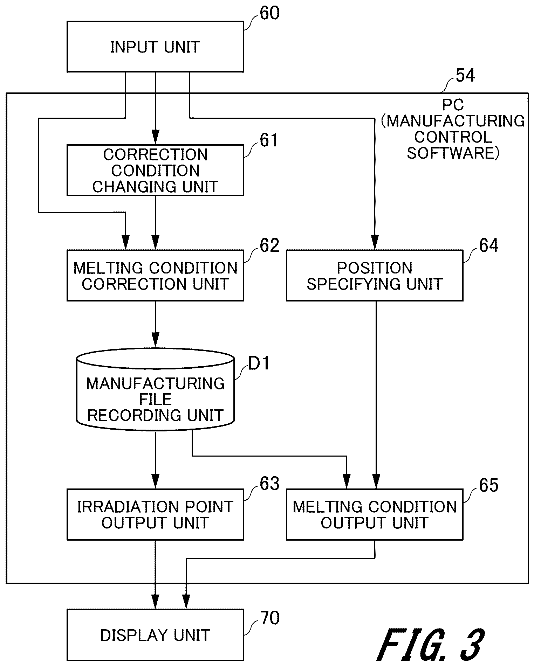

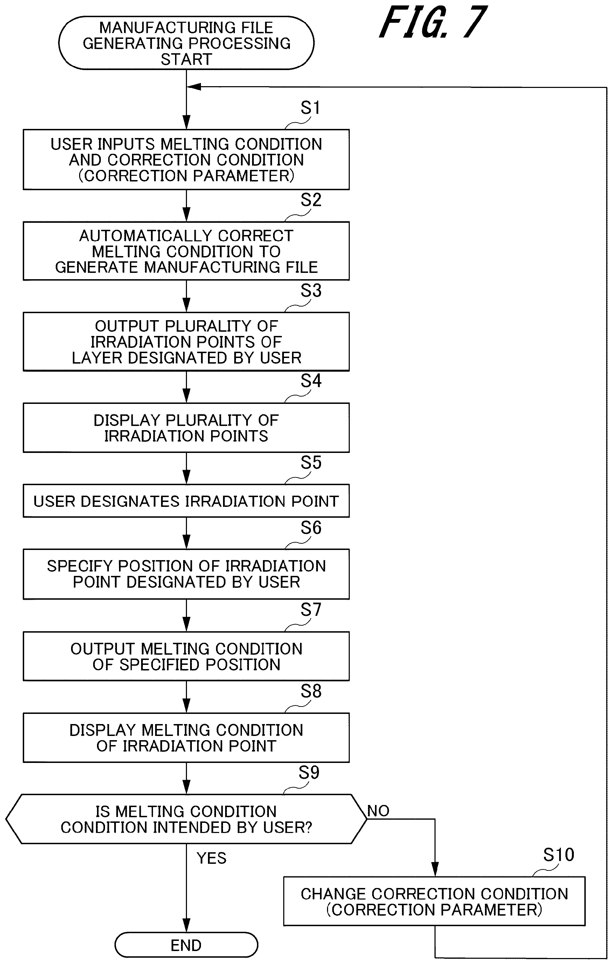

FIG. 3 is a diagram illustrating a configuration example of a control block of the PC 54. When the CPU 54a of the PC 54 executes the manufacturing control software, the manufacturing file generating processing (see FIG. 7 to be described later) performed by the functional blocks in cooperation with each other shown in FIG. 3 is implemented. Furthermore, each functional block of the PC 54 illustrated in FIG. 3 can be incorporated in the three-dimensional PBF-AM apparatus 1.

The PC 54 includes an input unit 60, a correction condition changing unit 61, a melting condition correction unit 62, an irradiation point output unit 63, a position specifying unit 64, a melting condition output unit 65, a display unit 70, and a manufacturing file recording unit D1.

The input unit 60 is used by the user to perform an input operation. The input unit 60 is a functional unit of the input device 56 illustrated in FIG. 2. The user's input operation includes, for example, a melting condition that the user inputs from the input unit 60 and sets. The melting condition is a condition that defines how the three-dimensional PBF-AM apparatus 1 irradiates the powder material 32 with the electron beam 15 to melt the powder material.

The user can set the irradiation current of the electron beam 15, the irradiation time, the irradiation on/off timing, and the like for the irradiation region of the electron beam 15.

The correction condition changing unit 61 changes the correction condition for correcting the melting condition by the melting condition correction unit 62. When the correction condition changing unit 61 changes the correction condition, the changed correction condition is output to the melting condition correction unit 62. However, since the default value of the melting condition is set in the melting condition correction unit 62 for the first time, the processing of the correction condition changing unit 61 is not performed.

The melting condition correction unit 62 automatically corrects the melting condition for melting the powder material according to the correction condition. The melting condition set by the user is not suitable for manufacturing the powder material 32 as it is. For example, the melting condition correction unit 62 changes the melting condition (scanning speed, irradiation current, and the like) of the electron beam 15 according to the shape of the manufactured object and the like. The melting condition corrected by the melting condition correction unit 62 is recorded (added) in the manufacturing file recording unit D1 as the corrected melting condition. The manufacturing file recording unit D1 is recorded in the recording device 54d illustrated in FIG. 2.

Note that the melting condition correction unit 62 corrects the melting condition again when the corrected melting condition is output to the display unit 70 and then the corrected melting condition is input from the input unit 60. In a case where the correction condition is changed by the correction condition changing unit 61, the melting condition correction unit 62 corrects the melting condition according to the changed correction condition. The melting condition corrected again is recorded in the manufacturing file.

The irradiation point output unit 63 outputs the irradiation point of the manufacturing beam read from the manufacturing file including the corrected melting condition corrected by the melting condition correction unit 62 to the display unit 70. For example, the irradiation point output unit 63 outputs, to the display unit 70, information (see FIGS. 4 and 5 to be described later) indicating the irradiation point in the layer input by the user through the input unit 60.

The display unit 70 displays the information indicating the irradiation point (see FIGS. 4 and 5 to be described later). As the display unit 70, for example, a liquid crystal display device, an organic EL display device, or the like is used.

In a case where a touch panel display is used for the PC 54, the input unit 60 and the display unit 70 are integrally formed.

The user may designate an irradiation point displayed on the display unit 70 and perform an operation of check a melting condition of the irradiation point. In this operation, the user operates the input unit 60 to designate the irradiation point at which the melting condition is desired to be checked from the information indicating the irradiation point displayed on the display unit 70.

The position specifying unit 64 specifies the position of the irradiation point designated by the input unit 60. For example, the position specifying unit 64 specifies the position of the irradiation point at the position input by the user through the input unit 60, and outputs the position of the irradiation point to the melting condition output unit 65.

The melting condition output unit 65 searches the manufacturing file recorded in the manufacturing file recording unit D1 for the corrected melting condition of the irradiation point at the position of the irradiation point specified by the position specifying unit 64, and outputs the searched corrected melting condition to the display unit 70. Thereafter, the melting condition output unit 65 outputs the acquired corrected melting condition to the display unit 70.

The display unit 70 displays the corrected melting condition output by the melting condition output unit 65 (see FIG. 5 to be described later). The display unit 70 is a functional unit of the BSE monitor 55 illustrated in FIG. 2.

In FIG. 3, the PC 54 includes the manufacturing file recording unit D1, but the manufacturing file recording unit D1 may be configured in a recording medium outside the PC 54. In this case, the melting condition correction unit 62 records the manufacturing file including the corrected melting condition on an external recording medium, and the irradiation point output unit 63 and the melting condition output unit 65 read the manufacturing file from the external recording medium.

Next, an information disclosure function of the irradiation point of the electron beam 15 added to the manufacturing control software will be described with reference to the display screen illustrated in FIG. 4 and subsequent drawings. All of these display screens are displayed on the display unit 70.

### 1-4. Display Example of Each Screen

FIG. 4 is a diagram illustrating a display example of the manufacturing region display screen W1.

The detection unit 46 (see FIG. 2) acquires, as a backscattered electron signal, backscattered electrons generated by irradiating the manufactured object 38 and the pre-sintered body 35 with the electron beam 15 from the beam irradiation device 2. The PC 54 monitors the state on the build plate 22 and the state of the manufactured object 38 by performing arithmetic processing, imaging processing, and the like on the backscattered electron signal, and displays an image of the build plate 22.

The manufacturing region display screen W1 displays a manufacturing region 80 and a plurality of irradiation points 81. The manufacturing region 80 is a region scanned with the electron beam 15. One irradiation point 81 represents a set of irradiation points of the electron beam 15 irradiated for manufacturing the manufactured object 38. When it is desired to check the irradiation point 81 in detail, the user designates an enlarged region 82. When the enlarged region 82 is designated, a region enlargement screen W2 illustrated in FIG. 5 is displayed.

FIG. 5 is a diagram illustrating a display example of the region enlargement screen W2.

A plurality of irradiation points 83 and 84 are displayed on the region enlargement screen W2. Each of the irradiation points 83 and 84 represents the irradiation position of the electron beam 15 at one time. The irradiation points 83 and 84 are displayed by being connected by a straight line so that the scanning direction of the electron beam 15 can be known. Note that the irradiation point 83 (white circle) indicates the position of the electron beam 15 with which a part of the outer periphery and inside of the irradiation point 81 are irradiated. The irradiation point 84 (gray circle) indicates the position of the electron beam 15 with which the outer periphery of the irradiation point 81 is irradiated.

The melting condition output unit 65 forms and displays a melting condition display section 86 for displaying the corrected melting condition on the display unit 70 in accordance with the positions of the irradiation points 83 and 84 designated by the input unit 60. For example, when the user moves a cursor 85 and the cursor 85 stops at any irradiation point 83, the melting condition display section 86 is automatically displayed on the display unit 70.

The melting condition display section 86 displays the melting condition of the irradiation point 83 at the position where the cursor 85 is stopped. Examples of the melting condition include "Emission" representing the beam current value of the electron beam 15, "Speed" representing the scanning speed of the electron beam 15, "Scan pitch" representing the irradiation point interval of the electron beam 15 in the scanning direction, and "Hatching distance" representing the distance between scanning lines of the electron beam 15. The correction result of the correction described above appears in "Emission" and "Speed".

The melting condition may include information other than these pieces of information. Furthermore, when the user clicks the irradiation point 81 on the manufacturing region display screen W1 illustrated in FIG. 4 with a cursor, the melting condition display section 86 at the irradiation point 81 may be displayed. However, since the irradiation point 81 is a set of irradiation points of the electron beam 15, the melting condition displayed on the melting condition display section 86 may be an average value, a mode value, or the like of the melting conditions at a plurality of irradiation points of the irradiation point 81.

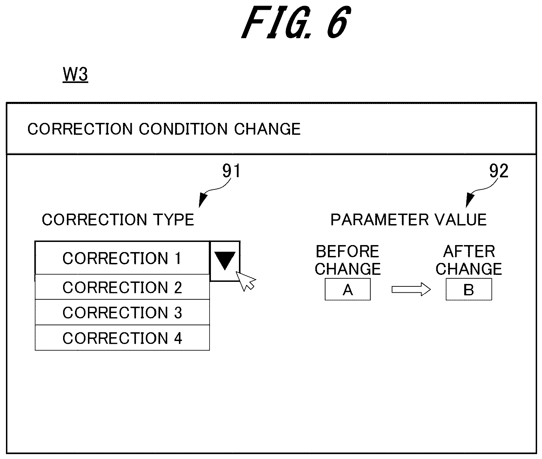

FIG. 6 is a diagram illustrating a display example of a correction condition change screen W3.

The correction condition change screen W3 includes a correction type selection button 91 for the user to select a correction type, and a parameter value display unit 92 indicating a change in the parameter value before and after the correction condition is changed.

When the display result of the region enlargement screen W2 illustrated in FIG. 5 is not intended by the user, the user needs to change the correction condition. The user selects any correction type (for example, any one of corrections 1 to 4) from the correction type selection button 91. The melting condition correction unit 62 illustrated in FIG. 3 corrects the melting condition again according to the selected correction type. Thereafter, the parameter value display unit 92 displays the parameter value before the change of the correction type (for example, A) and the parameter value after the change of the correction type (for example, B). Therefore, the user can check whether the change in the parameter value is appropriate. In addition, the user can display the region enlargement screen W2 illustrated in FIG. 5 again, select any irradiation point 83 with the cursor 85, and check each value of the melting condition after the change of the correction type.

### 1-5. Example of Manufacturing File Generating Processing

FIG. 7 is a flowchart illustrating an example of manufacturing file generating processing in the manufacturing control software.

First, the user operates the input unit 60 to input the melting condition and the correction condition (correction parameter) (S1). The user inputs various parameters necessary for generating the manufacturing file in addition to the melting condition.

Next, the melting condition correction unit 62 automatically corrects the melting condition input from the input unit 60 to generate a manufacturing file (S2). The generated manufacturing file is recorded in the manufacturing file recording unit D1.

Next, the irradiation point output unit 63 reads the manufacturing file from the manufacturing file recording unit D1, and outputs a plurality of calculated irradiation points in the layer designated by the user to the display unit 70 (S3).

Next, the display unit 70 displays the irradiation point output by the irradiation point output unit 63 (S4). In this flowchart, the irradiation point is displayed on the display unit 70, but the scanning line of the electron beam 15 may be displayed on the display unit 70.

Next, the user operates the input unit 60 to place the cursor 85 on the irradiation point displayed on the display unit 70, and designates the irradiation point for which the melting condition is desired to be checked (S5). The irradiation point is selected on the manufacturing region display screen W1 illustrated in FIG. 4 or the region enlargement screen W2 illustrated in FIG. 5.

Next, the position specifying unit 64 specifies the position of the irradiation point designated by the user (S6). The position specifying unit 64 notifies the melting condition output unit 65 of the specified position.

Next, the melting condition output unit 65 reads the melting condition of the irradiation point at the position specified by the position specifying unit 64 from the manufacturing file recording unit D1, and outputs the melting condition to the display unit 70 (S7).

The display unit 70 displays the melting condition output by the melting condition output unit 65 (S8). The melting condition displayed on the display unit 70 may include other parameters in addition to Emission, Speed, Scan pitch, and Hatching distance illustrated in FIG. 5.

The user checks whether or not the melting condition displayed on the display unit 70 is a condition intended by the user (S9). If the melting condition displayed on the display unit 70 is not the condition intended by the user (NO in S9), the correction condition changing unit 61 changes the correction condition (correction parameter) by the user (S10). Thereafter, the manufacturing control software repeats the processes of step S1 and subsequent steps.

For example, after the user corrects any one of Emission, Speed, Scan pitch, and Hatching distance displayed on the display unit 70, the manufacturing file recording unit D1 records the manufacturing file in which the melting condition is corrected again by the melting condition correction unit 62. In the manufacturing file recording unit D1, a correction history of the manufacturing file may be left, and the previously generated manufacturing file may be readable. Thereafter, the user performs processing of designating the irradiation point in step S5, and checks the melting condition displayed on the display unit 70. Note that only the melting condition input by the user in step S1 may be changed without changing the correction condition by the correction condition changing unit 61 in step S10.

When the melting condition displayed on the display unit 70 is the condition intended by the user (YES in S9), this processing is ended.

In the PC 54 having the manufacturing control software according to the first embodiment described above, the melting condition is displayed on the region enlargement screen W2 illustrated in FIG. 5. Therefore, the user can check the melting condition.

In addition, even when the melting condition input in advance is automatically corrected, the user can check the corrected melting condition for each irradiation point displayed on the display unit 70. The user can check the melting condition for each scanning line (irradiation point) before the powder material 32 is melted in the display function of the scanning line (irradiation point) included in the manufacturing control software. Therefore, in a case where the corrected melting condition is corrected to a melting condition not intended by the user, the user can generate a manufacturing file of the melting condition intended by the user by correcting the melting condition and repeating the operation of checking the automatically corrected melting condition again.

Since the corrected melting condition of the irradiation point at the position designated by the user is displayed, the user can check the final melting condition which is set to the scanning line or the irradiation point and automatically corrected. Since the melting condition which has been a black box so far becomes clear, the user can easily obtain information necessary for development, research, and the like of a procedure in manufacturing. Therefore, it is expected that the work efficiency in the development, research, and the like of the procedure in manufacturing is remarkably improved.

### 2. Second Embodiment

### 2-1. Configuration Example of Control Block

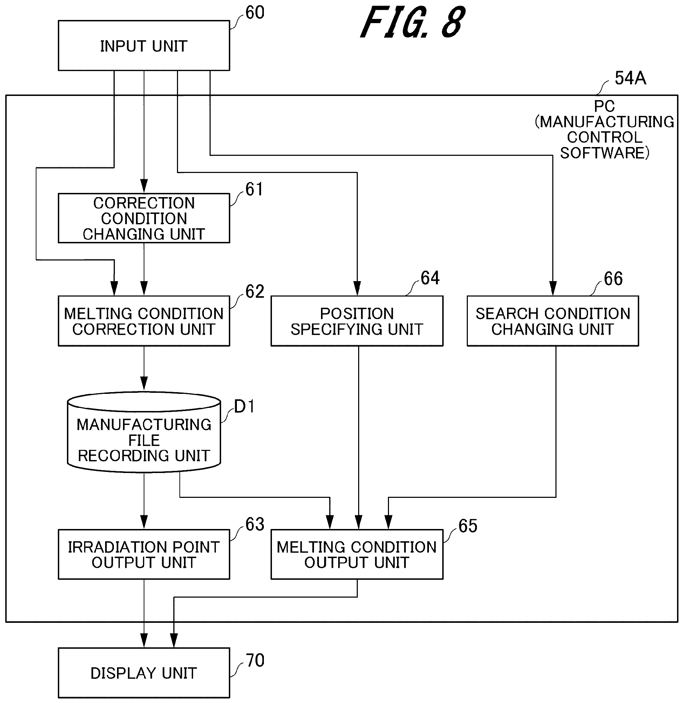

Next, a configuration example and an operation example of a PC having manufacturing control software according to a second embodiment of the present invention will be described with reference to FIGS. 8 to 12. In the PC having the manufacturing control software according to the second embodiment, a function of searching for information of the irradiation point is added, and various searches are enabled by variously changing the search condition for the user to search for the melting condition.

FIG. 8 is a block diagram illustrating a configuration example of a control block of a PC 54A. The control block of the PC 54A is implemented by the manufacturing control software according to the second embodiment.

The PC 54A has a configuration in which a search condition changing unit 66 is added to the control block of the PC 54 illustrated in FIG. 3. The description of the control block of the PC 54 according to the first embodiment will be omitted.

The search condition changing unit 66 changes the search condition for searching for the corrected melting condition. The search condition changing unit 66 outputs, to the melting condition output unit 65, the search condition for searching for the melting condition changed from the input unit 60 by the user.

In step S1 in the flowchart of the manufacturing file generating processing shown in FIG. 7, the user performs a process of inputting the melting condition using the input unit 60, and at this time, the user also performs the process of the search condition changing unit 66.

The melting condition output unit 65 searches the manufacturing file recorded in the manufacturing file recording unit D1 for the corrected melting condition based on the changed search condition. In addition, the melting condition output unit 65 can increase or decrease the search condition by an instruction of the input unit 60.

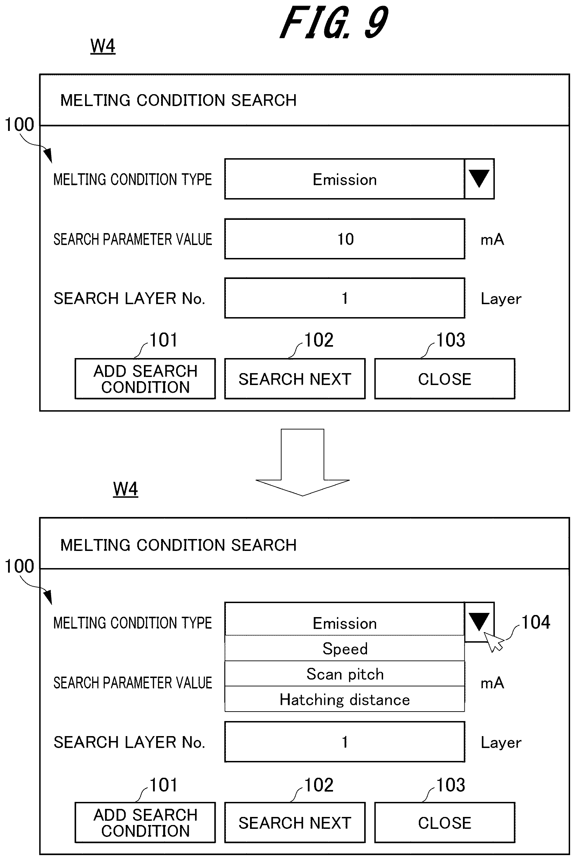

The display unit 70 displays the corrected melting condition output by the melting condition output unit 65 (see FIGS. 9 to 12 to be described later).

### 2-2. Display Example of Each Screen

FIG. 9 is a diagram illustrating a display example of a melting condition search screen W4 (melting condition type change).

The melting condition search screen W4 includes a search condition setting unit 100, an add search condition button 101, a search next button 102, and a close button 103. The melting condition search screen W4 is displayed to be superimposed on the manufacturing region display screen W1 illustrated in FIG. 4 or the region enlargement screen W2 illustrated in FIG. 5.

In the search condition setting unit 100, the melting condition type, the search parameter value, and the search layer number (No.) are displayed. As the melting condition type, Emission representing the beam current is displayed by default. As the search parameter value, 10 [mA] which is a beam current value is input as a parameter value at the time of searching for Emission. In addition, as the search layer number, the number of the layer when searching for the beam current value is input.

The add search condition button 101 is a button used by the user to add a search condition. The search next button 102 is a button for giving an instruction to display the next irradiation point 83 corresponding to the search condition when the irradiation point 83 corresponding to the search condition is displayed. The close button 103 is a button for the user to give an instruction to close the melting condition search screen W4.

As illustrated in the lower part of FIG. 9, when the user selects the pull-down of the melting condition type with the cursor 104, Speed, Scan pitch, and Hatching distance are displayed in addition to Emission. When the user selects, for example, Speed in addition to Emission, a search parameter value and a search layer number (No.) corresponding to Speed are displayed. The search condition changing unit 66 outputs the Speed selected by the user to the melting condition output unit 65 as the changed search condition. The melting condition output unit 65 outputs information of a search parameter value and a search layer number (No.) corresponding to Speed to the display unit 70 extracted from the manufacturing file.

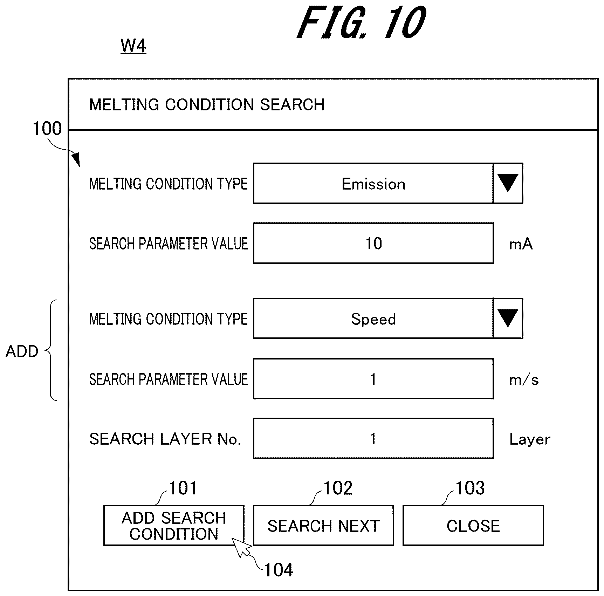

FIG. 10 is a diagram illustrating a display example of the melting condition search screen W4 (addition of search condition).

When the user operates the cursor 104 and presses the add search condition button 101 on the melting condition search screen W4 illustrated in FIG. 9, the melting condition search screen W4 to which the melting condition is added is displayed. The melting condition search screen W4 is displayed when the user simultaneously sets a plurality of search conditions.

For example, in addition to the melting condition type (Emission), the search parameter value, and the search layer number (No.) displayed on the melting condition search screen W4, the melting condition type (Speed) and the search parameter value are displayed. Another melting condition type can be set for the added melting condition type. The search condition changing unit 66 outputs the added melting condition type to the melting condition output unit 65 as the changed search condition. The melting condition output unit 65 outputs information of a search parameter value and a search layer number (No.) corresponding to the added melting condition type to the display unit 70 extracted from the manufacturing file.

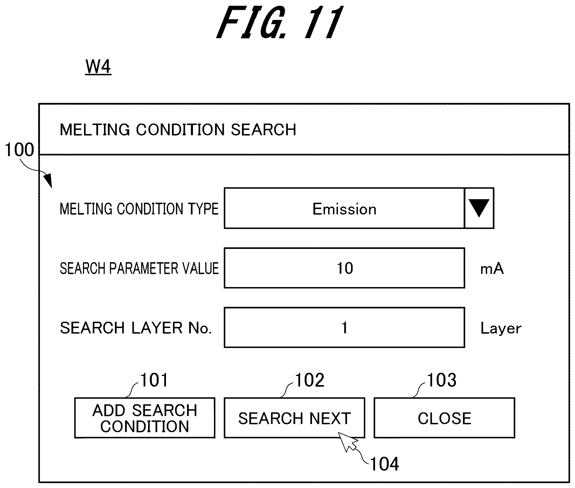

FIG. 11 is a diagram illustrating a display example of the melting condition search screen W4 (search next).

The melting condition search screen W4 shows a state in which the user operates the cursor 104 and the search next button 102 is selected. The position specifying unit 64 outputs the corrected melting condition searched by the melting condition output unit 65 and the irradiation point corresponding to the search condition to the display unit 70 in the order corresponding to the search condition.

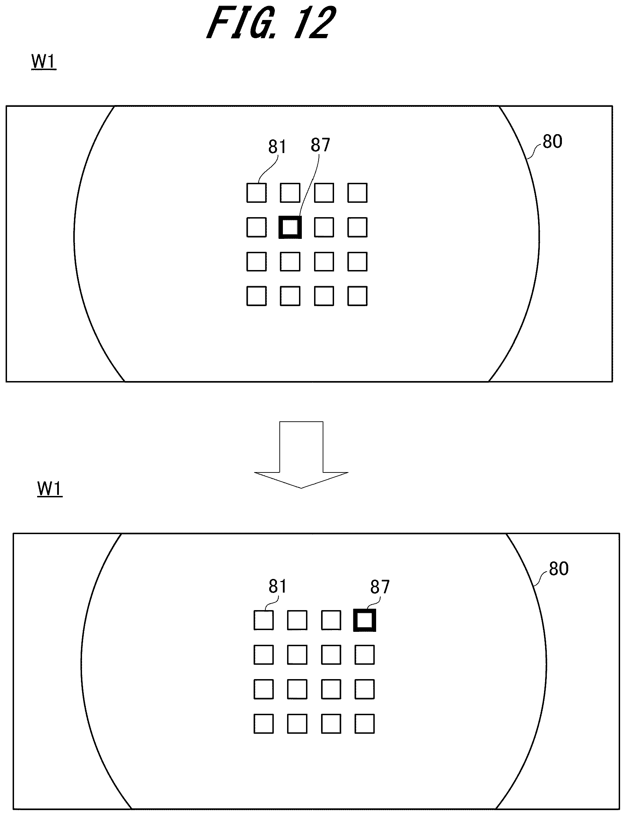

For example, when the user presses the search next button 102, the position specifying unit 64 specifies the position of the irradiation point 81 (represented as a search target point 87 in FIG. 12 described later) corresponding to the search condition displayable on the display unit 70 next, and outputs the position to the melting condition output unit 65. The melting condition output unit 65 extracts the irradiation point 81 at the specified position from the manufacturing file as the search target point 87, and outputs information of the search target point 87 to the display unit 70.

FIG. 12 is a diagram illustrating a display example of the manufacturing region display screen W1 (search next) .

First, the irradiation point 81 of the electron beam 15 corresponding to the melting condition is displayed as the search target point 87. In FIG. 12, the search target point 87 is highlighted with a thick black frame, but may be displayed in a different color from other portions. As illustrated in FIG. 11, when the user presses the search next button 102, the irradiation point 81 corresponding to the melting condition is then displayed as the search target point 87 on the manufacturing region display screen W1.

Therefore, the user does not need to select each irradiation point 81 and search for the melting condition. Note that the plurality of irradiation points 81 corresponding to the melting condition may be simultaneously highlighted with a black frame or displayed in a different color from other portions. Further, also on the region enlargement screen W2, when the search next button 102 is pressed, the irradiation points 83 and 84 corresponding to the melting condition are highlighted or displayed in a different color from the other portions, similarly to the manufacturing region display screen W1.

In the PC 54A having the manufacturing control software according to the second embodiment described above, the function of searching for the information of the irradiation point is added, so that the user can check the melting condition or the corrected melting condition corresponding to the search condition for each irradiation point displayed on the display unit 70. For example, the user can change the melting condition type, the search parameter value, or the search layer number and check only the corresponding corrected melting condition, so that the work efficiency is improved.

In addition, since the search condition can be optionally added or deleted, the user can search for the corrected melting condition by combining a plurality of search conditions.

As illustrated in FIG. 12, the user can sequentially change the search target point 87 corresponding to the search condition from the plurality of irradiation points 81 displayed on the manufacturing region display screen W1. Therefore, the user can easily grasp where the search target point 87 is located in the manufacturing region.

Since the manufacturing control software according to the second embodiment includes the function of the manufacturing control software according to the first embodiment, the PC 54A can use the manufacturing control software according to the first and second embodiments in combination.

### 3. Third embodiment

### 3-1. Display Example of Each Screen

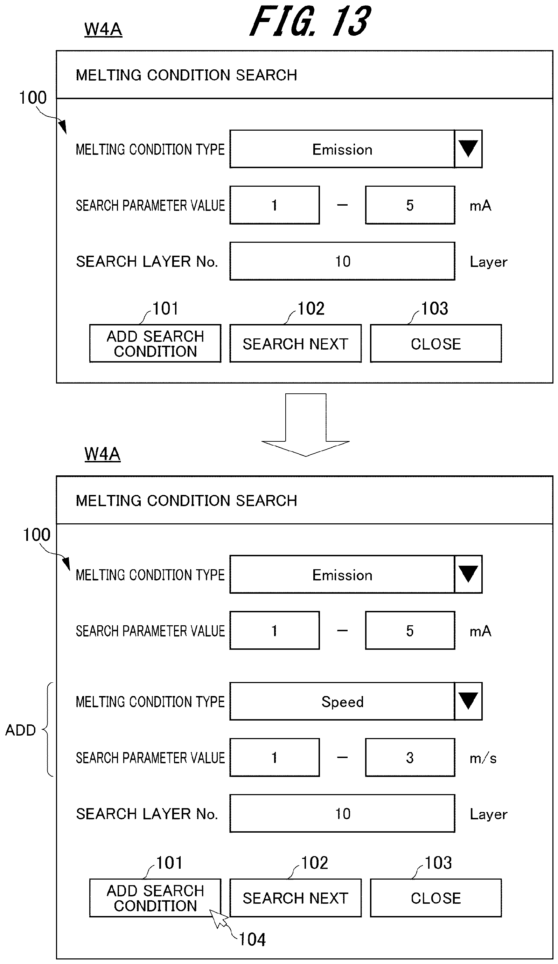

Next, a configuration example and an operation example of a PC having manufacturing control software according to a third embodiment of the present invention will be described with reference to FIG. 13. In the PC having the manufacturing control software according to the third embodiment, a function of searching for information of the irradiation point by limiting the information to a predetermined range is added, and various searches are enabled by variously changing the search condition for the user to search for the melting condition.

The function that features the manufacturing control software according to the third embodiment is one function of the search condition changing unit 66. Therefore, the configuration of the PC 54A having the manufacturing control software according to the third embodiment is similar to the PC 54A illustrated in FIG. 8, but the functions of the melting condition output unit 65 and the search condition changing unit 66 are different.

The search condition changing unit 66 changes the range of the search parameter value according to the type of the melting condition with respect to the search condition.

The melting condition output unit 65 searches the manufacturing file for the corrected melting condition included in the changed range of the search parameter value range.

FIG. 13 is a diagram illustrating a display example of a melting condition search screen W4A (specification of search range) according to the third embodiment.

The melting condition search screen W4A illustrated on the upper side of FIG. 13 has the same configuration as the melting condition search screen W4 illustrated in FIG. 9, but an input field for designating a range is provided in the field of the search parameter value.

The user can designate a range of the search parameter value of the melting condition designated by the melting condition type.

FIG. 13 illustrates a case where Emission is designated as the melting condition type and, for example, 1 to 5 [mA] is designated as the range of the search parameter value. Information of the irradiation point corresponding to the melting condition included in the range in which the search parameter value is designated is displayed on the display unit 70.

The melting condition search screen W4A illustrated on the lower side of FIG. 13 is obtained by adding a melting condition type by pressing the add search condition button 101. An example of the added melting condition type is Speed. Also in the added melting condition type, an input field for designating a range is provided in the search parameter value field. This drawing illustrates a case where, for example, 1 to 3 [m/s] is designated as the range of the search parameter value when the added melting condition type is Speed.

Note that, similarly to the melting condition search screen W4 illustrated in FIGS. 11 and 12, when the user presses the search next button 102, the position specifying unit 64 specifies the position of the irradiation point 81 (represented as the search target point 87 in FIG. 12 to be described later) corresponding to the search condition whose search parameter value corresponds to the search condition and can be displayed on the display unit 70 next, and outputs the position to the melting condition output unit 65.

The melting condition output unit 65 extracts the irradiation point 81 at the specified position from the manufacturing file as the search target point 87, and outputs information of the search target point 87 to the display unit 70. The melting condition output unit 65 extracts the irradiation point 81 at the specified position from the manufacturing file as the search target point 87, and outputs information of the search target point 87 to the display unit 70.

In the PC 54A having the manufacturing control software according to the third embodiment described above, the search result of the search parameter value designated by the user is displayed on the display unit 70. Therefore, only the search target point 87 corresponding to the search parameter value within the range desired to be known by the user can be displayed, and the search efficiency of the corrected melting condition is improved.

Since the manufacturing control software according to the third embodiment includes the function of the manufacturing control software according to the first embodiment, the PC 54A can use the manufacturing control software according to the first and third embodiments in combination.

### 4. Modification

In each of the embodiments described above, an example in which the present invention is applied to the manufacturing control software dedicated to manufacturing used in the powder bed type three-dimensional PBF-AM apparatus has been described. However, it is not necessary to limit the manufacturing beam to the electron beam method, and the present invention may be applied to manufacturing control software of a manufacturing apparatus including other methods such as a laser method.

Note that the present invention is not limited to the above-described embodiments, and it is needless to say that various other application examples and modifications can be taken without departing from the gist of the present invention described in the claims.

For example, in each of the above-described embodiments, the configurations of the manufacturing control software of the three-dimensional PBF-AM apparatus 1 and the PC 54 are described in detail and specifically in order to describe the present invention in an easily understandable manner, and the present invention is not necessarily limited to those having all the described configurations. In addition, a part of the configuration of the embodiment described here can be replaced with the configuration of another embodiment, and furthermore, the configuration of another embodiment can be added to the configuration of an embodiment. In addition, it is also possible to add, delete, and replace other configurations for a part of the configuration of each embodiment.

In addition, the control lines and the information lines indicate what is considered to be necessary for the description, and do not necessarily indicate all the control lines and the information lines on the product. In practice, it may be considered that almost all the configurations are connected to each other.

### Reference Signs List

- 1: three-dimensional powder bed fusion additive manufacturing (PBF-AM) apparatus
- 2: beam irradiation device
- 15: electron beam
- 32: powder material
- 35: pre-sintered body
- 38: manufactured object
- 42: camera
- 60: input unit
- 61: correction condition changing unit
- 62: melting condition correction unit
- 63: irradiation point output unit
- 64: position specifying unit
- 65: melting condition output unit
- 66: search condition changing unit
- 70: display unit
- 86: melting condition display section
- 91: correction type selection button
- W1: manufacturing region display screen
- W2: region enlargement screen
- W3: correction condition change screen
- W4: melting condition search screen

## Claims

1. An information processing apparatus (54) that controls an operation of a beam irradiation device (2) that irradiates a powder material (32) with a manufacturing beam (15) to melt the powder material (32), the information processing apparatus (54) comprising:
an irradiation point output unit (63) that outputs an irradiation point of the manufacturing beam (15) read from a manufacturing file to a display unit (70);
a position specifying unit (64) that specifies a position of the irradiation point designated by an input unit (60); and
a melting condition output unit (65) that searches the manufacturing file for a melting condition of the irradiation point at the specified position and outputs the searched melting condition to the display unit (70).

2. The information processing apparatus (54) according to claim 1, wherein
the melting condition output unit (65) outputs a melting condition display section (86) that displays the melting condition on the display unit (70) in accordance with a position of the irradiation point designated by the input unit (60).

3. The information processing apparatus (54) according to claim 2, wherein
the melting condition displayed in the melting condition display section (86) includes at least one of a beam current value of the manufacturing beam (15), a scanning speed of the manufacturing beam (15), an irradiation point interval of the manufacturing beam (15) in a scanning direction, and a distance between scanning lines of the manufacturing beam (15).

4. The information processing apparatus (54) according to claim 3, further comprising:
a melting condition correction unit (62) that corrects the melting condition according to a correction condition and adds a corrected melting condition obtained by correcting the melting condition to the manufacturing file.

5. The information processing apparatus (54) according to claim 4, wherein
the melting condition correction unit (62) corrects the melting condition again when the corrected melting condition is input from the input unit (60) after the corrected melting condition is output to the display unit (70).

6. The information processing apparatus (54) according to claim 4 or 5, further comprising:
a search condition changing unit (66) that changes a search condition for searching for the corrected melting condition, wherein
the melting condition output unit (65) searches the manufacturing file for the corrected melting condition according to the changed search condition.

7. The information processing apparatus (54) according to claim 6, wherein
the melting condition output unit (65) increases or decreases the search condition in accordance with an instruction from the input unit (60).

8. The information processing apparatus (54) according to claim 6, wherein
the position specifying unit (64) outputs the corrected melting condition searched by the melting condition output unit (65) and the irradiation point corresponding to the search condition to the display unit (70) in the order of the correspondence to the search condition.

9. The information processing apparatus (54) according to claim 6, wherein
the search condition changing unit (66) changes a range of a search parameter value according to a type of the melting condition with respect to the search condition, and
the melting condition output unit (65) searches the manufacturing file for the corrected melting condition included in the changed range of the search parameter value.

10. The information processing apparatus (54) according to claim 4, further comprising:
a correction condition changing unit (61) that changes the correction condition, wherein
the melting condition correction unit (62) corrects the melting condition in accordance with the corrected correction condition.

11. A three-dimensional powder bed fusion additive manufacturing apparatus (1) comprising:
a beam irradiation device (2) that irradiates a powder material (32) with a manufacturing beam (15) to melt the powder material (32); and an information processing apparatus (54) that controls an operation of the beam irradiation device (2), wherein
the three-dimensional powder bed fusion additive manufacturing apparatus (1) comprising:
a build plate (22) and an inner base (24) on which the powder material (32) is spread to form a powder bed;
a powder supply system (16) that spreads the powder material (32) over the powder bed;
the beam irradiation device (2) including a beam irradiation unit that irradiates the powder material (32) spread on the powder bed with the manufacturing beam (15) and an electron optical system that scans the manufacturing beam (15) according to a melting condition for melting the powder material (32) and melts the powder material (32) spread on the powder bed;
an irradiation point output unit (63) that outputs an irradiation point of the manufacturing beam (15) read from a manufacturing file to a display unit (70);
a position specifying unit (64) that specifies a position of the irradiation point designated by an input unit (60); and
a melting condition output unit (65) that searches the manufacturing file for the melting condition of the irradiation point at the specified position and outputs the searched melting condition to the display unit (70).
